# EUROPEAN PATENT SPECIFICATION

(11) **EP 3 274 607 B1**
(45) Date of publication and mention of the grant of the patent: **11.12.2019**
(21) Application number: 16714691.9
(22) Date of filing: 23.03.2016
(51) Int. Cl.: B23K 26/322, G01M 1/24, B23K 26/21, F16F 15/32, F16C 3/02, G01M 1/32

(54) **LASER WELDING OF BALANCE WEIGHTS TO DRIVESHAFTS**
LASERSCHWEISSEN VON WUCHTGEWICHTEN AN ANTRIEBSWELLEN
SOUDAGE AU LASER DE MASSES D'ÉQUILIBRAGE POUR DES ARBRES DE TRANSMISSION

(30) Priority: 26.03.2015 US 201562138961 P
(43) Date of publication of application: 31.01.2018
(73) Proprietor: Dana Automotive Systems Group, LLC, Maumee, OH 43537 (US)
(72) Inventor: NIJAKOWSKI, Christopher, M., Swanton, OH 43558 (US)
(74) Representative: Pfenning, Meinig & Partner mbB
(86) International application number: PCT/US2016/023662
(87) International publication number: WO 2016/154239

(56) References cited:
- EP-A2- 2 360 462
- DE-A1- 10 310 417
- GB-A- 1 033 675
- US-A1- 2010 234 117

## Description

### FIELD OF THE INVENTION

The present invention relates to driveshafts with balance weights welded thereon and methods of manufacturing the same. The invention also relates to driveshaft balancing equipment incorporating one of or both of a paint removal device or a welding device.

### BACKGROUND OF THE INVENTION

After manufacture of a driveshaft, it is standard procedure to balance the driveshafts by adding weights in specific places determined by sophisticated balancing equipment, as is well known in the art. The balancing process ensures even rotation of the driveshaft and prevents wear and poor performance. Generally, the driveshaft is manufactured, the driveshaft is measured for balance, then the weights are added, and then the assembly is painted. Alternatively, prior methods have used a painted driveshaft and removed a large area of paint to allow for the balance weights to be welded onto the driveshaft in the appropriate position. However, this method then requires the area around the newly welded balance weight to be re-painted. In addition, methods currently employed do not incorporate the paint removal or attachment of the balance weight, which then would need to be performed at another time and location.

Disclosed herein is a driveshaft and method of manufacturing a driveshaft with balance weights that are welded onto an already painted driveshaft. One or both of a paint removal step or a welding step can be combined with the balancing process allowing for less handling time and less scrap in the manufacturing process. These improvements can lead to significant cost savings. Also disclosed is balancing equipment used to balance the driveshafts of the invention.

Document DE 103 10 417 A1, which is considered to be the closest prior art, discloses a method of applying balancing weights to coated driveshaft, where the coating is removed by means of abrasion and the balancing weight is attached by adhesion or welding.

Document GB 1 033 675 A discloses a rotating body balancing equipment incorporating a material removal device and a device for adding compensation masses to rotating body, where these devices can perform the actions of drilling, grinding or the like or sticking, riveting, welding or the like.

### SUMMARY OF THE INVENTION

The present invention is directed toward a method of attaching a balance weight to a driveshaft with a coat of paint by first detecting a location on the driveshaft where balance weight is to be applied; then removing paint in that location; abutting the balance weight against the location; and then welding the balance weight to the driveshaft at that location.

The present invention also relates to a driveshaft assembly, including a driveshaft with a coat of paint; a balance weight; and a point of attachment between the driveshaft and the balance weight. The point of attachment can be a weld, and the weld is formed between the balance weight and the driveshaft at a location where the coat of paint has been removed.

The present invention relates to driveshaft balancing equipment incorporating a device for removing paint from a driveshaft. Driveshaft balancing equipment incorporating a device for welding a balance weight onto a driveshaft are also included in the invention. In one embodiment, the device for one or both of removing paint from the driveshaft or welding the balance weight to the driveshaft is the same device. One or both of the paint removal device or welding device may be a laser.

### BRIEF DESCRIPTION OF THE DRAWINGS

The above, as well as other advantages of the present invention, will become readily apparent to those skilled in the art from the following detailed description when considered in the light of the accompanying drawings in which:

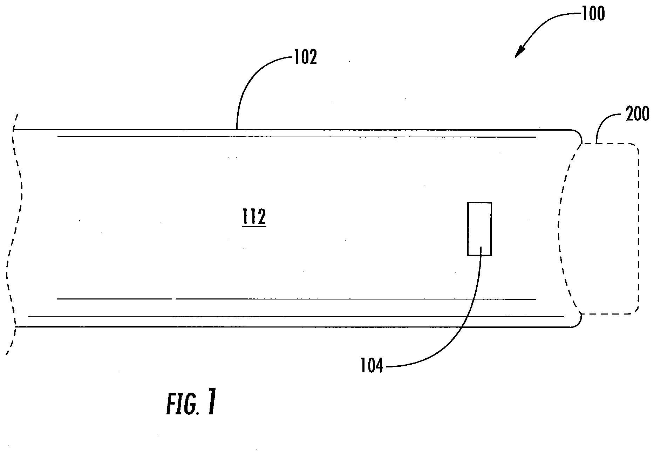

Fig. 1 shows a portion of the driveshaft with of one embodiment of the invention.
Fig. 2 shows a welded balance weight on a driveshaft in accordance with one embodiment of the invention.
Fig. 3 shows various views of a balance weight in accordance with one embodiment of the invention.
Fig. 4 shows a balance weight (Fig. 4A) and driveshaft (Fig. 4B) of one embodiment of the invention with areas to be welded indicated.
Fig. 5 shows the steps of one embodiment of the invention for the method of applying the balance weights to a driveshaft.
Fig. 6 shows driveshaft balancing equipment in accordance with one embodiment of the current invention.
Fig. 7 shows driveshaft balancing equipment in accordance with one embodiment of the current invention.
Fig. 8 shows driveshaft balancing equipment with a driveshaft that has had paint removed in accordance with another embodiment of the current invention.
Fig. 9 shows driveshaft balancing equipment with a driveshaft with balance weights welded thereon in accordance with another embodiment of the current invention.

### DETAILED DESCRIPTION

One end of a finished driveshaft 102 with a balance weight 104 and a coat of paint 112 in accordance with the embodiments of the current invention is shown in assembly 100. A generic end fitting 200 is shown by the dotted lines on the right hand side of the figure.

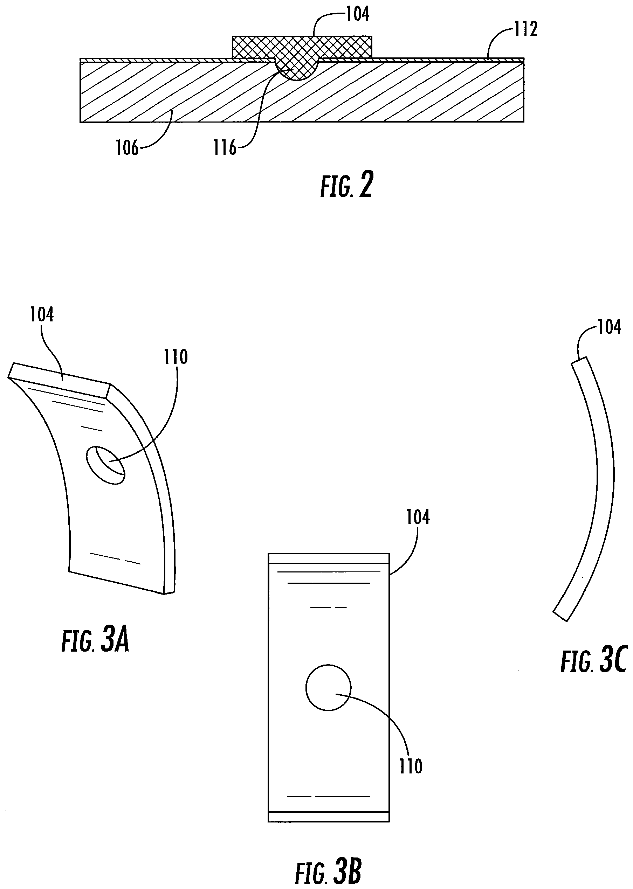

The driveshaft 102 is a tube with a wall 106. Fig. 2 shows a cross-section of a balance weight 104 welded via weld 116 to the wall 106 of the driveshaft 102. As made clear in Fig. 2, the weight 104 is attached to the driveshaft 102 that has a coat of paint 112.

Fig. 3 shows three views (Fig. 3A is a perspective view; Fig. 3B is a frontal view; Fig. 3C is a side view) of the type of balance weight 104 used in typical embodiments of the invention. Reference number 110 is a hole created in the manufacture of the balance weight 104. In alternative embodiments the balance weight 104 does not have a hole 110.

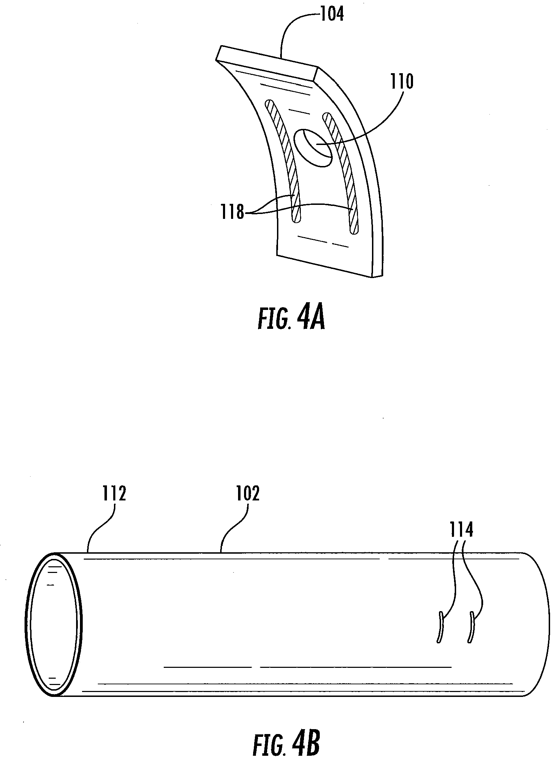

Fig. 4A shows the balance weight 104 with two balance welding areas 118 that will be welded to the driveshaft 102. Any number or size of balance welding areas 118 can be used. The two balance welding areas 118 shown here are simply for explanation purposes and are not limiting in any way.

Fig. 4B shows the driveshaft 102 with a coat of paint 112 where the driveshaft welding areas 114 have been created by removing the coat of paint 112. As with the balance welding areas 18 shown in Fig. 4A, the driveshaft welding areas 114 can be of any number or size and are simply for explanation purposes and are not limiting in any way. In typical embodiments, the balance welding areas 118 and the driveshaft welding areas 114 will be complementary in shape and number because in practice they represent the shape of the weld 116 that is formed.

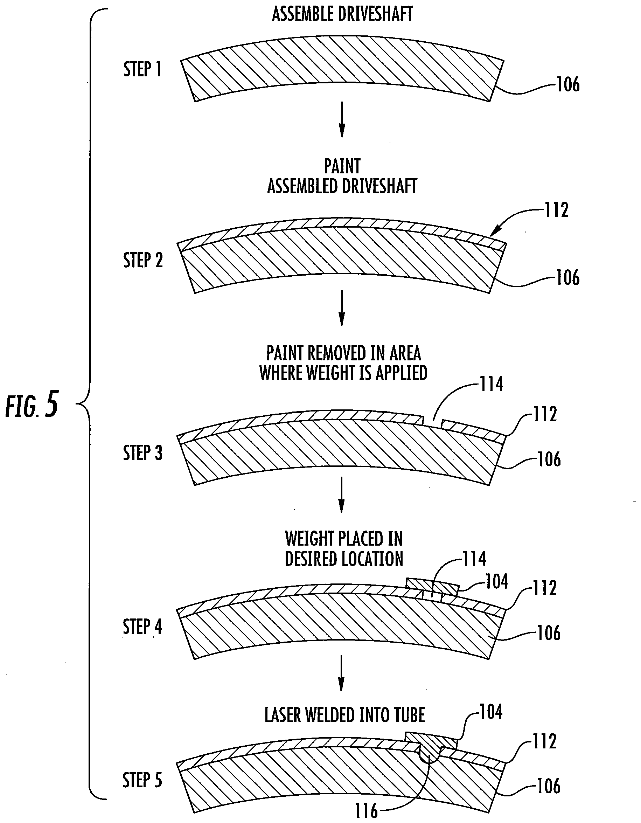

Fig. 5 delineates the general steps of the method of applying the balance weight 104 to the driveshaft 102 having a coat of paint 112. First, the driveshaft 102 is assembled. Here, the driveshaft 102 is shown in cross- section so the wall 106 is represented. After assembly, a coat of paint 112 is applied to the wall of the driveshaft 106. Once the balancing process has been performed and the location for placement of the balance weight 104 has been determined, a driveshaft welding area 114 may be created by laser ablation of the coat of paint 112 in the driveshaft welding area 114. For even greater efficiency, the laser ablation can be incorporated in to the balancing process and equipment. After the driveshaft welding area 114 is created, the balance weight 104 is placed in the desired location. The weight 104 may be clamped into place. At this point, the balance weight 104 is welded into the wall of the driveshaft 106 creating a weld 116 between the driveshaft welding area 114 and the balance welding area 118, creating the final, balanced driveshaft assembly 100. Again, the process of laser welding can be incorporated into the balancing process and equipment in order to further improved efficiency.

In one embodiment, the steps of the method may comprise the following:
1. Load driveshaft into balancing equipment 210.
2. Balancing equipment 210 cycles and determines the imbalance, if any.
3. Balancing equipment 210 positions a first end region 205 of the driveshaft 102 toward the balancing actuator 230, which comprises one or both of a paint removal device 250 or a welding device 260, specific to where the balance weight 104 needs added.
4. Paint removal device 250 removes paint 114 on the first end region 205 of the driveshaft 102.
5. Balancing equipment 210 positions a second end region 206 of the driveshaft 102 toward the balancing actuator 230, which comprises one or both of the paint removal device 250 or the welding device 260, specific to where the balance weight 104 needs added.
6. Paint removal device 250 removes paint 114 on the second end region 206 of the driveshaft 102.
7. Automation as is known in the art selects and positions balance weight 104 on the second end region 206 of the driveshaft 102.
8. Welding device 260 welds balance weight 104 to the second end region 206 of the driveshaft 102.
9. Balancing equipment 210 positions the first end region 205 of the driveshaft 102 toward the balancing actuator 230, which comprises one or both of paint removal device 250 or welding device 260, specific to where the balance weight 104 needs added.
10. Automation selects and positions balance weight 104 on first end region 205 of the driveshaft 102.
11. Balancing actuator 230, which comprises one or both of the paint removal device 250 or the welding device 260, welds the balance weight 104 to the first end region 205 of the driveshaft 102.
12. Balancing equipment 210 cycles and determines the imbalance.
13. Decision - Repeat steps 2 thru 12 until balance of driveshaft assembly 100 is acceptable.

Generally, the driveshaft 102 is usually made from steel. Likewise, the balance weight 104 is usually also made from steel. In alternative embodiments, the balance weight 104 and the driveshaft 102 may be made from different materials, for instance, when one of the driveshaft 102 or balance weight 104 is made from aluminum. Any suitable material can be used for either component. When the coat of paint 112 is removed from the driveshaft welding areas 114, the steel to steel contact between the driveshaft wall 106 and the balance weight 104 allows for successful welding to occur. By only removing the coat of paint 112 in the driveshaft welding areas, once the balance weight 104 is welded to the driveshaft 102, no repainting is required, thereby eliminating an additional step in the manufacture of the driveshaft assembly 100 and improving efficiency and lowering cost. In some embodiments, the driveshaft balanced according to this method is not repainted after balancing. In some embodiments, the driveshaft balanced according to this method is repainted after balancing. The type of welding used will most likely be via use of a laser 300, but any other type of welding known that can attach the balance weight 104 to the driveshaft 102 can be used. In embodiments that use laser welding, the laser 300 can be incorporated into the balancing equipment 210 so that the paint removal and welding can all be performed during the balancing process.

The balancing equipment 210 into which one or both of the paint removal device 250 or welding device 260 are to be incorporated is very well known in the art. One, non-limiting example, is a driveshaft balancing equipment 210 manufactured by Schenck Corporation. In one embodiment of the driveshaft balancing equipment 210 modified to incorporate one or both of paint removal device 250 or welding device 260, uses a laser 300 incorporated in to the balancing equipment 210 to remove the coat of paint 112 at location 114 and weld the weight 104 onto the driveshaft 102. The paint removal device 250 or welding device 260, which may be (but does not have to be) the same device is generically referred to as the balancing actuator 230.

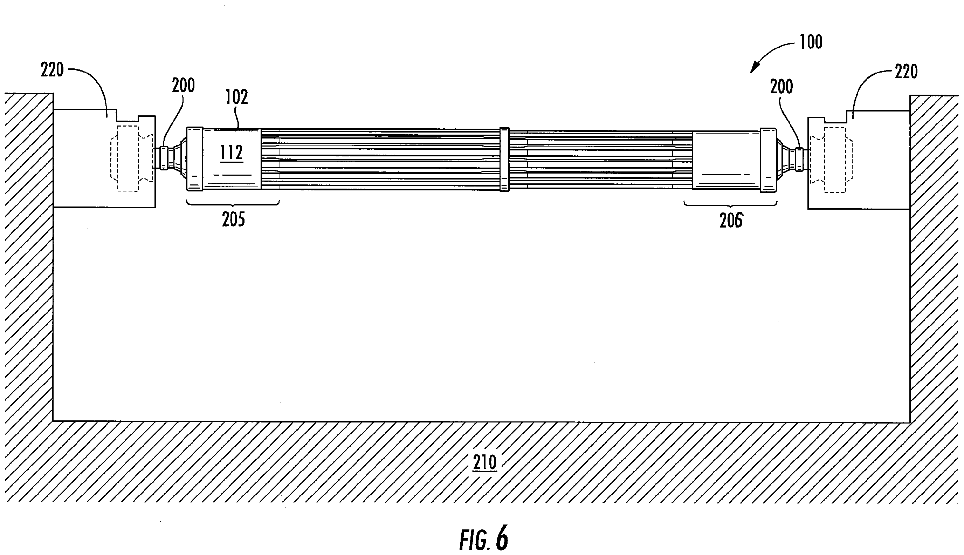

Fig. 6 shows a driveshaft 102 with a coat of paint 112 in balancing equipment 210.
The driveshaft 102 is held on either end in the balancer via its endfittings 200 by workholders 220. The prior art would normally balance an unpainted driveshaft 102. Here, the balancing occurs on a driveshaft 102 with a coat of paint 112 already applied.

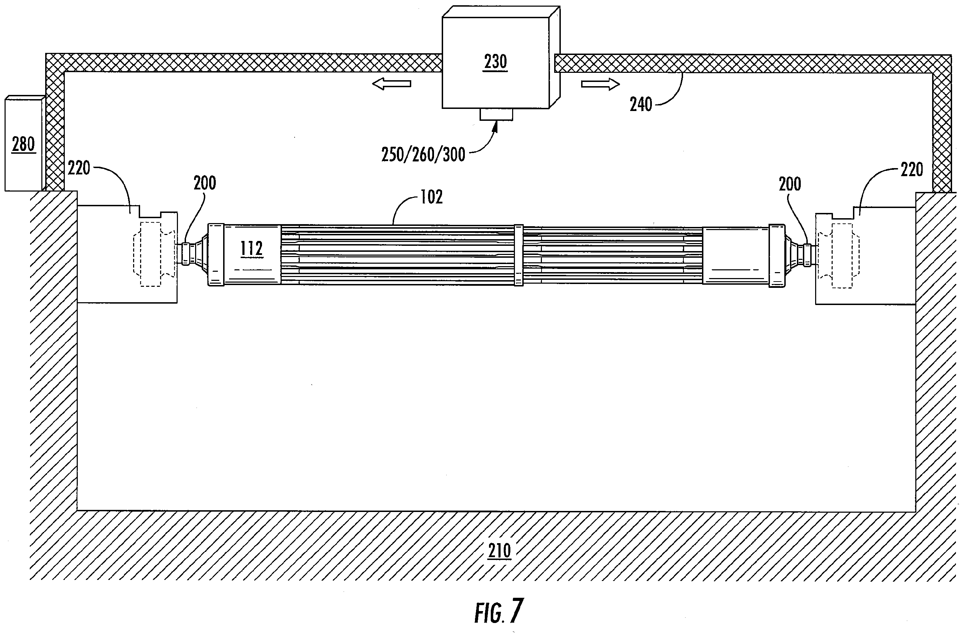

Fig. 7 shows driveshaft balancing equipment 210 with a balancing actuator 230 attached to an overhead frame 240. This is only one type of balancing equipment 210 that can be used in accordance with the current invention. Usually, the balancing actuator 230 will be connected to a server 280 where the server will process information sensed by the balancing actuator 230 and further direct the balancing actuator 230 to slide along the overhead frame 240 as necessary to complete the balancing operation. These processes are all known in the art and are described herein in very basic terms for contextual purposes.

The balancing actuator 230 is meant to cover any device known in the art to carry out the balancing operations of the balancing equipment 210. Therefore, the balancing actuator 230 may include sensing the weight centerline, velocity, resonance, or other characteristics of a rotating driveshaft 102 being balanced. The balancing actuator 230 may also comprise means for determining the desired placement of the balance weights 104 and attaching the balance weights 104 thereon. The embodiments of the current invention are meant to build on the balancing actuators 230 already known and described and used in the prior art. Any balancing equipment 210 that uses any type of balancing actuator 230, for example, equipment where the balancing actuator 230 is not on an overhead frame 240 should be understood to be within the scope of the invention.

One inventive aspect of the embodiment shown in Fig 7 is the balancing of a driveshaft 102 with a coat of paint 112. Another inventive aspect of the embodiment shown in Fig. 7 is the inclusion of a paint removal device 250 in the balancing actuator 230. In addition, the balancing actuator 230 can include a welding device 260. In some embodiments, the paint removal device 250 and the welding device 260 are the same device. In another embodiment, the paint removal device 250 and the welding device 260 are the same device and are a laser 300.

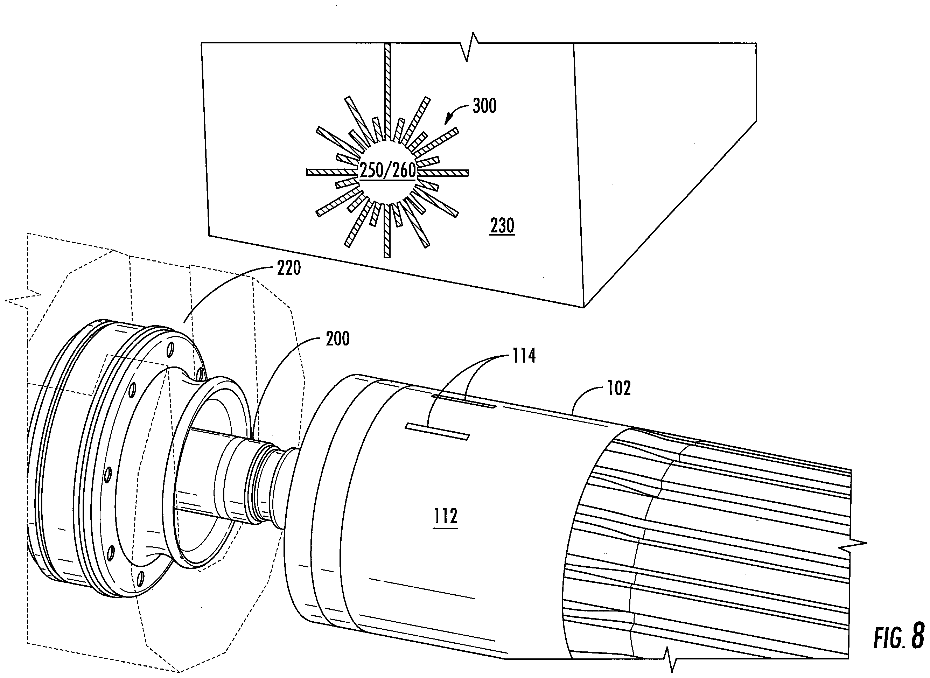

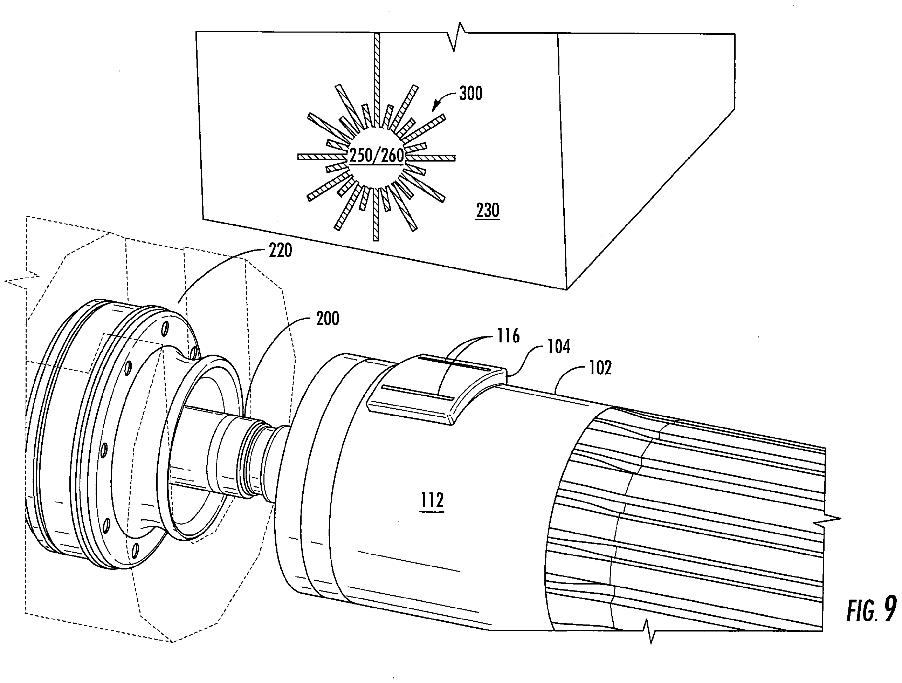

Figs. 8 and 9 show a close-up of a driveshaft 102 with a coat of paint 112 held by its end-fittings 200 in the balancing equipment by the workholders 220. The balancing actuator 230 is shown in both figures and can comprise one or both of the paint removal device 250 or welding device 260. In one embodiment, one or both of the paint removal device 250 or welding device 260 is the same and is a laser 300. Fig. 8 shows the driveshaft 102 with paint removed 114. This corresponds to step 3 in Fig. 5. Fig. 9 shows how the balance weight 104 is welded via welds 116 in the precise location where the paint was earlier removed 114. Fig. 9 corresponds to step 5 in Fig. 5.

Per the provisions of the patent laws, the present invention has been described in what is considered to represent its preferred embodiments. However, it should be noted that the invention can be practiced other than as specifically illustrated and described without departing from its scope as defined in the appended claims.

## Claims

1. A method of attaching a balance weight (104) to a driveshaft (102), comprising the steps of:
a. providing a driveshaft with a coat of paint (112) thereon;
b. providing balancing equipment (210);
c. securing said driveshaft within said balancing equipment;
d. determining an imbalance in said driveshaft with said balancing equipment;
e. determining a location on said driveshaft where a balance weight is to be attached;
f. removing paint from said driveshaft in said balance weight location determined with a laser to create a driveshaft welding area (114);
g. abutting said balance weight against said driveshaft in said balance weight location determined; and
h. welding said balance weight to said driveshaft at said balance weight location determined with said laser.

2. The method of claim 1, wherein said paint removal and said welding step are performed by a single laser device.

3. The method of claim 1, further comprising the step of providing a balancing actuator in said balancing equipment provided, wherein said balancing actuator determines said balance weight location.

4. The method of claim 1, where no repainting occurs after said balance weight has been welded onto said driveshaft.

5. The method of claim 3, wherein said balancing actuator of said balancing equipment provided further includes therein said laser for removing said paint from said driveshaft and welding said balancing weight to said driveshaft.

6. The method of claim 1, wherein said paint is only removed from said driveshaft in said location where said weld attaches said balance weight to said driveshaft.

7. The method of claim 1, wherein said balance weight location determined is located within a first end region of said driveshaft.

8. A driveshaft assembly (100), comprising:
a. a balancing weight (104) having balance welding areas (118); and
b. a driveshaft (102) with a coat of paint (112) thereon, wherein said driveshaft has driveshaft welding areas (114) created by the removal of an amount of paint from said driveshaft by laser ablation with a laser (300),
wherein said driveshaft welding areas have a size and number complementary to said balance welding areas of said balancing weight, wherein said balancing weight is attached to said driveshaft by creating a laser weld between said balance welding areas of said balancing weight and said driveshaft welding areas of said driveshaft with said laser.

## Patentansprüche

1. Verfahren zum Anbringen eines Ausgleichsgewichts (104) an eine Antriebswelle (102), das folgende Schritte umfasst:
a) Bereitstellen einer Antriebswelle, auf der sich eine Schicht Lack befindet;
b) Bereitstellen von Ausgleichsgeräten (210);
c) Befestigen der Antriebswelle innerhalb der Ausgleichsgeräte;
d) Ermittlung einer Unausgeglichenheit in der Antriebswelle mit den Ausgleichsgeräten;
e) Ermittlung einer Stelle an der Antriebswelle, an der ein Ausgleichsgewicht angebracht werden soll;
f) Entfernen von Lack von der Antriebswelle an der durch einen Laser ermittelten Ausgleichsgewichtsstelle, um einen Antriebswellenschweißbereich (114) zu erzeugen;
g) Lehnen des Ausgleichsgewichts an die Antriebswelle an der ermittelten Ausgleichsgewichtsstelle; und
h) Schweißen des Ausgleichsgewichts an die Antriebswelle an der durch den Laser ermittelten Ausgleichsgewichtsstelle.

2. Verfahren nach Anspruch 1, wobei der Lackentfernungs- und der Schweißschritt durch ein einzelnes Lasergerät erfolgen.

3. Verfahren nach Anspruch 1, das ferner den Schritt des Bereitstellens eines Ausgleichsaktuators in den bereitgestellten Ausgleichsgeräten umfasst, wobei der Ausgleichsaktuator die Ausgleichsgewichtsstelle ermittelt.

4. Verfahren nach Anspruch 1, bei dem keine Neulackierung auftritt, nachdem das Ausgleichsgewicht an die Antriebswelle geschweißt wurde.

5. Verfahren nach Anspruch 3, wobei der Ausgleichsaktuator der bereitgestellten Ausgleichsgeräte ferner den Laser zum Entfernen des Lacks von der Antriebswelle und Schweißen des Ausgleichsgewichts an die Antriebswelle umfasst.

6. Verfahren nach Anspruch 1, wobei der Lack nur an der Stelle von der Antriebswelle entfernt wird, an der die Schweißung das Ausgleichsgewicht an die Antriebswelle anbringt.

7. Verfahren nach Anspruch 1, wobei sich die ermittelte Ausgleichsgewichtsstelle innerhalb einer ersten Endregion der Antriebswelle befindet.

8. Antriebswellenanordnung (100), die Folgendes umfasst:
a) ein Ausgleichsgewicht (104), das Ausgleichsschweißbereiche (118) aufweist; und
b) eine Antriebswelle (102), auf der sich eine Schicht Lack (112) befindet, wobei die Antriebswelle Antriebswellenschweißbereiche (114) aufweist, die durch das Entfernen von einer Menge Lack von der Antriebswelle durch Laserablation mit einem Laser (300) erzeugt wurden,
wobei die Antriebswellenschweißbereiche eine Größe und Anzahl aufweisen, die komplementär zu den Ausgleichsschweißbereichen des Ausgleichsgewichts sind, wobei das Ausgleichsgewicht durch das Erzeugen einer Laserschweißung mit dem Laser an die Antriebswelle angebracht ist zwischen den Ausgleichsschweißbereichen des Ausgleichsgewichts und den Antriebswellenschweißbereichen der Antriebswelle.

## Revendications

1. Procédé de fixation d'une masse d'équilibrage (104) sur un arbre de transmission (102), comprenant les étapes constituées par :
a. le fait de munir un arbre de transmission d'une couche de peinture ;
b. le fait de prévoir un équipement d'équilibrage (210) ;
c. la fixation sécurisée dudit arbre de transmission à l'intérieur dudit équipement d'équilibrage ;
d. la détermination d'un déséquilibre au niveau dudit arbre de transmission à l'aide dudit équipement d'équilibrage ;
e. la détermination d'une localisation sur ledit arbre de transmission au niveau de laquelle une masse d'équilibrage doit être fixée ;
f. l'enlèvement de la peinture dudit arbre de transmission au niveau de ladite localisation de masse d'équilibrage déterminée à l'aide d'un laser de manière à créer une zone de soudage d'arbre de transmission (114) ;
g. la mise en butée de ladite masse d'équilibrage contre ledit arbre de transmission au niveau de ladite localisation de masse d'équilibrage qui est déterminée ; et
h. le soudage de ladite masse d'équilibrage sur ledit arbre de transmission au niveau de ladite localisation de masse d'équilibrage déterminée à l'aide dudit laser.

2. Procédé selon la revendication 1, dans lequel ladite étape d'enlèvement de la peinture et ladite étape de soudage sont réalisées au moyen d'un unique dispositif de laser.

3. Procédé selon la revendication 1, comprenant en outre l'étape consistant à prévoir un actionneur d'équilibrage dans ledit équipement d'équilibrage qui est prévu, dans lequel ledit actionneur d'équilibrage détermine ladite localisation de masse d'équilibrage.

4. Procédé selon la revendication 1, dans lequel aucune peinture à nouveau n'est réalisée après que ladite masse d'équilibrage a été soudée sur ledit arbre de transmission.

5. Procédé selon la revendication 3, dans lequel ledit actionneur d'équilibrage dudit équipement d'équilibrage qui est prévu inclut en outre en son sein ledit laser pour enlever ladite peinture dudit arbre de transmission et pour souder ladite masse d'équilibrage sur ledit arbre de transmission.

6. Procédé selon la revendication 1, dans lequel ladite peinture est seulement enlevée dudit arbre de transmission au niveau de ladite localisation au niveau de laquelle ladite soudure fixe ladite masse d'équilibrage sur ledit arbre de transmission.

7. Procédé selon la revendication 1, dans lequel ladite localisation de masse d'équilibrage qui est déterminée est localisée à l'intérieur d'une première région d'extrémité dudit arbre de transmission.

8. Ensemble d'arbre de transmission (100), comprenant :
a. une masse d'équilibrage (104) qui comporte des zones de soudage d'équilibrage (118) ; et
b. un arbre de transmission (102) qui est muni d'une couche de peinture (112), dans lequel ledit arbre de transmission comporte des zones de soudage d'arbre de transmission (114) qui sont créées au moyen de l'enlèvement d'une quantité de peinture dudit arbre de transmission au moyen d'une ablation par laser à l'aide d'un laser (300) ;
dans lequel lesdites zones de soudage d'arbre de transmission présentent une dimension et sont selon un nombre qui sont complémentaires de ceux desdites zones de soudage d'équilibrage de ladite masse d'équilibrage, dans lequel ladite masse d'équilibrage est fixée sur ledit arbre de transmission en créant une soudure laser entre lesdites zones de soudage d'équilibrage de ladite masse d'équilibrage et lesdites zones de soudage d'arbre de transmission dudit arbre de transmission à l'aide dudit laser.
